# EUROPEAN PATENT SPECIFICATION

(11) **EP 3 303 103 B1**
(45) Date of publication and mention of the grant of the patent: **28.07.2021**
(21) Application number: 16804594.6
(22) Date of filing: 03.06.2016
(51) Int. Cl.: B62D 27/02, B62D 65/02, B62D 29/00

(54) **SYSTEMS AND METHODS FOR ADHESIVE INJECTION FOR NODE ASSEMBLY**
SYSTEME UND VERFAHREN ZUR HAFTMITTELINJEKTION FÜR KNOTENANORDNUNG
SYSTÈMES ET PROCÉDÉS POUR INJECTION D'ADHÉSIF POUR ENSEMBLE NOEUD

(30) Priority: 04.06.2015 US 201562170988 P
(43) Date of publication of application: 11.04.2018
(73) Proprietor: Divergent Technologies Inc., Los Angeles, California 90502 (US)
(72) Inventor: CZINGER, Kevin, R., Santa Monica, California 90402 (US); BALZER, William, Bradley, Santa Monica, CA 90403 (US); PENMETSA, Praveen, Varma, Long Beach, CA 90815 (US); OMOHUNDRO, Zachary, Meyer, Hermosa Beach, CA 90254 (US); O'BRIEN, Matthew, M., Hermosa Beach, CA 90254 (US)
(74) Representative: Dentons UK and Middle East LLP
(86) International application number: PCT/US2016/035893
(87) International publication number: WO 2016/197047

(56) References cited:
- DE-A1- 19 929 057
- US-A- 4 721 407
- US-A- 4 721 407
- US-A- 4 804 209
- US-A- 4 804 209
- US-A1- 2003 102 668
- US-A1- 2009 014 121
- US-A1- 2009 014 121
- US-B2- 8 590 654

## Description

### BACKGROUND

Tube frame chassis construction is used extensively in low volume and high performance vehicle design with the advantages of low tooling costs, design flexibility, and the ability to produce high efficiency structures. Existing fabrication methods for tube frame chassis require a significant amount of labor to cut and notch all tubes to the correct length, also a skilled welder is needed to bind each tube connection joint. The use of carbon fiber as the material for the tubes in the chassis frame reduces the labor and tooling cost of construction. However, challenges arise with connecting the carbon fiber tubes at intersections because these tubes cannot be welded. Adhesive can be provided to form a bond between the tube and the joint connection. Application of adhesive can require specialized tools and careful monitoring of adhesive thickness and coverage at the connection point between the joint and the tube.

US4721407 discloses an improved joint for a bicycle frame having a first sleeve for receiving a head tube and a second sleeve projecting laterally from the first sleeve, for receiving a top tube or a downtube, wherein the second sleeve includes an inner tube and an outer tube, which coaxially project from the first sleeve and which are spaced from each other with a circumferential clearance which is slightly larger than the thickness of the top tube or the downtube so that the top tube or downtube may be snap fit into this clearance.

US2009/014121 discloses a pipe joint that is particularly suitable for joining pipes composed of materials having a low surface energy and excellent resistance to solvents.

### SUMMARY

Provided herein are systems and method for injection of adhesive into a connection point between a joint and a tube. The joint can comprise one or more integrated structural features configured to provide a fluid pathway for delivery of adhesive from an adhesive source to a connection point or space between the joint and the tube. In some cases, the adhesive can be simultaneously pushed into the space between the joint and the tube with positive pressure through an adhesive injection port and pulled into the space by a negative pressure source applied to the space. The joint can be heated in order to facilitate flow of the adhesive within the one or more integrated structural features to reduce cycle time and accelerate curing.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings (also "figure" and "FIG." herein), of which:
FIG. 1 shows a frame made up of joints and tubes.
FIG. 2a shows an example of a joint having a plurality of acceptor ports in accordance with an embodiment of the invention.
FIG. 2b shows another example of a joint having a plurality of acceptor ports in accordance with an embodiment of the invention.
FIG. 2c shows another example of a joint having a plurality of acceptor ports with different diameters in accordance with an embodiment of the invention.
FIG. 2d shows a cross-sectional view of a joint connecting a plurality of connecting tubes.
FIG. 3a shows a cross sectional view of an inner protrusion fitted in a tube to form one or more gaps between a surface of the inner protrusion and an inner surface of a tube.
FIG. 3b shows a cross sectional view of an inner protrusion fitted in a tube to with adhesive in one or more gaps formed between a surface of the inner protrusion and an inner surface of a tube.
FIG. 4 shows one or more fluid delivery ports in fluid communication with a fluid delivery path of a joint.
FIG. 5 shows an adhesive source and a negative pressure source, each connected to a fluid delivery path of a joint.
FIG. 6 shows a joint with one or more fluid delivery ports removed.
FIG. 7a shows an example of a joint protrusion with a small nubs centering feature.
FIG. 7b shows an example of a joint protrusion with a spiral path centering feature.
FIG. 7c shows an example of a joint protrusion with a labyrinth centering feature.
FIG. 7d shows an example of a joint protrusion with an interrupted helix centering feature.

### DETAILED DESCRIPTION

While various embodiments of the invention have been shown and described herein, it will be obvious to those skilled in the art that such embodiments are provided by way of example only. Numerous variations, changes, and substitutions may occur to those skilled in the art without departing from the invention. It should be understood that various alternatives to the embodiments of the invention described herein may be employed.

This disclosure provides systems and methods for connecting a tube and node assembly to form a frame, for example a chassis frame. Each tube and node in the tube and node assembly can be connected by injecting an adhesive into a space provided between a surface of the node and a surface of the tube. In some cases, the tube and node assembly can form a two dimensional structure. The tube and node assembly can form a three dimensional structure. The tube and node assembly can form a frame for a vehicle.

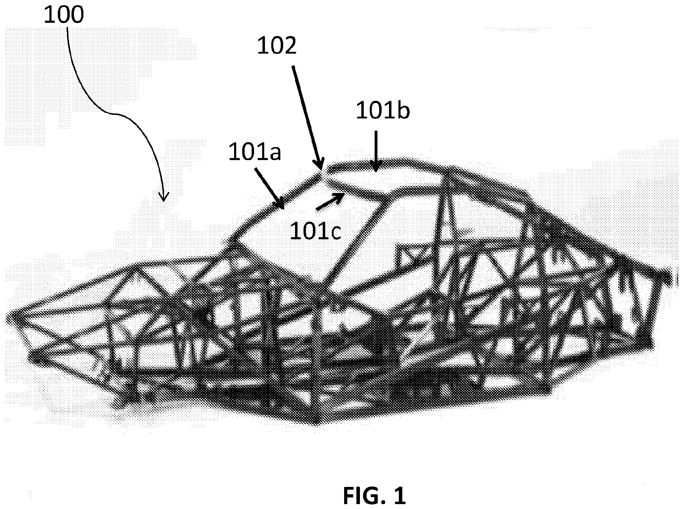

FIG. 1 shows a vehicle chassis **100** including connecting tubes **101a, 101b, 101c** connected by one or more nodes **102,** in accordance with an embodiment of the invention. Each node can be sized and shaped such that it can connect to one or more tubes. Each node can connect to one or more tubes through a port that extends from a body of the node. A multi-port node, or joint member, may be provided to connect with one or more tubes to form a two or three-dimensional structure. The structure may be a frame. In one example, a two dimensional structure may be a planar frame, while a three dimensional structure may be space frame. A space frame may enclose a volume therein. In some examples, a three dimensional space frame structure may be a vehicle chassis. The vehicle chassis may be have a length, width, and height that may enclose a space therein. The length, width, and height of the vehicle chassis may be greater than a thickness of a connecting tube. Any description herein of a vehicle chassis or any type of chassis may be applied to any type of space frame, and vice versa.

A vehicle chassis may form the framework of a vehicle. A vehicle chassis may provide the structure for placement of body panels of a vehicle, where body panels may be door panels, roof panels, floor panels, or any other panels forming the vehicle enclosure. Furthermore the chassis may be the structural support for the wheels, drive train, engine block, electrical components, heating and cooling systems, seats, or storage space. A vehicle may be a passenger vehicle capable of carrying at least about 1 or more, 2 or more, 3 or more, 4 or more, 5 or more, 6 or more, 7 or more, 8 or more, ten or more, twenty or more, or thirty or more passengers. Examples of vehicles may include, but are not limited to sedans, trucks, buses, vans, minivans, station wagons, RVs, trailers, tractors, go-carts, automobiles, trains, or motorcycles, boats, spacecraft, or airplanes. A space frame may be provided for a vehicle, or for any other type of structure including, but not limited to, towers, buildings, bicycles, tricycles, bridges, lighting structures, furniture, stages, trusses, or walls. Any description herein of a chassis or vehicle chassis may apply to any type of space frame. Similarly, any description herein of nodes that may be used to connect tubes in a vehicle chassis may be applied to any type of space frame.

The vehicle chassis may provide a form factor that matches the form factor of the type of vehicle. Depending on the type of vehicle, the vehicle chassis may have varying configurations. The vehicle chassis may have varying levels of complexity. In some instances, a three-dimensional space frame may be provided that may provide an outer framework for the vehicle. The outer framework may have body panels to form a three-dimensional enclosure. Optionally, inner supports or components may be provided. Different layouts of multi-port nodes and connecting tubes may be provided to accommodate different vehicle chassis configurations. Nodes may be able to support tubes in a two or three-dimensional plane. For example, a multi-prong node may be configured to connect tubes that do not all fall within the same plane. The tubes connected to a multi-prong node may be provided in a three-dimensional fashion and may span three orthogonal axes. In alternate embodiments, some nodes may connect tubes that may share a two-dimensional plane.

The joints described herein can be used to form a vehicle chassis in a short period of time. In some cases, a user or a group of users can assemble the chassis in a time scale on the order of minutes, hours, or days. The chassis can be disassembled and at least a portion of the joints can be used to form a different type of chassis for use as a different type of vehicle. The joints can be reused in different types of chassis. The joints can be reusable. In some cases, a first chassis can be built using a set of joints and tubes. The first chassis can be disassembled and a second chassis can be built using at least a subset of the set of joints and tubes. The first chassis and the second chassis can correspond to different types of vehicles. For example, the first chassis and the second chassis can be different size (e.g., volume, weight, carrying capacity) vehicles. In some cases, the first chassis and the second chassis can correspond to vehicles with different functions. Vehicle functions can include military use, commercial use, hauling, transporting one or more humans, and/or travel on a specified type of terrain.

The connecting tubes **101a, 101b, 101c** of the vehicle may be formed from a carbon fiber material. Examples of composite materials may include high modulus carbon fiber composite, high strength carbon fiber composite, plain weave carbon fiber composite, harness satin weave carbon composite, low modulus carbon fiber composite, or low strength carbon fiber composite. In alternate embodiments, the tubes may be formed from other materials, such as plastics, polymers, metals, or metal alloys. The connecting tubes may be formed from rigid materials. The connecting tubes may have varying dimensions. For example, different connecting tubes may have different lengths. For example, the connecting tubes may have lengths on the order of about 1 inch, 3 inches, 6 inches, 9 inches, 1 ft, 2 ft, 3 ft, 4 ft, 5 ft, 6 ft, 7 ft, 8 ft, 9 ft, 10 ft, 11 ft, 12 ft, 13 ft, 14 ft, 15 ft, 20 ft, 25 ft, or 30ft. In some instances, the tubes may have the same diameter, or varying diameters. In some instances, the tubes may have diameters on the order of about 1/16", 1/8", 1/4", 1/2", 1", 2", 3", 4", 5", 10", 15", or 20".

The connecting tubes may have any cross-sectional shape. For example, the connecting tubes may have a substantially circular shape, square shape, oval shape, hexagonal shape, or any irregular shape. The connecting tube cross-section could be an open cross section, such as a C-channel, I-beam, or angle.

The connecting tubes **101a, 101b, 101c** may be hollow tubes. A hollow portion may be provided along the entire length of the tube. For example, the connecting tubes may have an inner surface and an outer surface. An inner diameter for the tube may correspond to an inner surface of the connecting tube. An outer diameter of the tube may correspond to an outer surface of the tube. In some embodiments, the difference between the inner diameter and the outer diameter may be less than or equal to about 1/32", 1/16", 1/8", 1/4", 1/2", 1", 2", 3", 4, or 5". A connecting tube may have two ends. The two ends may be opposing one another. In alternative embodiments, the connecting tubes may have three, four, five, six or more ends. The vehicle chassis frame may comprise carbon fiber tubes connected with joints **102.**

The multi-port nodes **102** (a.k.a. joint members, joints, connectors, lugs) presented in this disclosure may be suitable for use in a vehicle chassis frame such as the frame shown in FIG. 1. The nodes in the chassis frame (100) may be designed to fit the tube angles dictated by the chassis design. The nodes may be pre-formed to desired geometries to permit rapid and low cost assembly of the chassis.

A joint or node may be composed of a metallic material (e.g. aluminum, titanium, or stainless steel, brass, copper, chromoly steel, or iron), a composite material (e.g. carbon fiber), or a polymeric material (e.g. plastic). The joint may be formed of a substantially rigid material. The joint may be fabricated by 3D-printing, casting, by use of a mold, by machining, or by some combination of these processes.

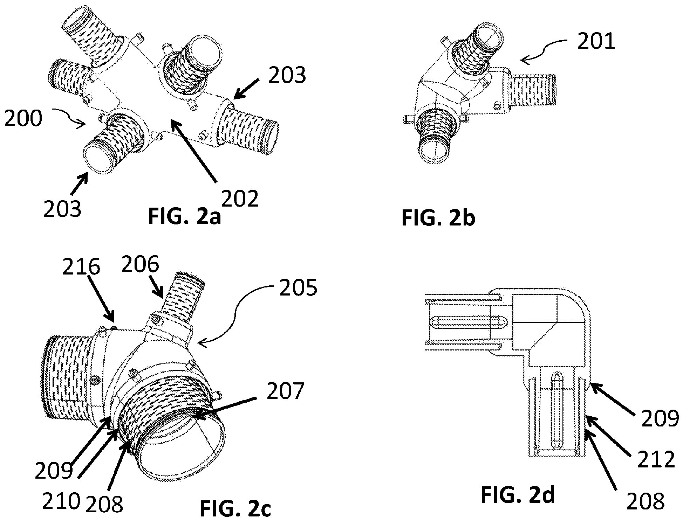

FIG. 2a and FIG. 2b show examples of joints (a.k.a. nodes). FIG. 2a shows a joint, or multi-prong node, **200** with five protruding acceptor ports, or prongs, for connecting with tubes. FIG. 2b shows a joint **201** with three protruding acceptor ports for connecting tubes. A joint (i.e., multi-prong node) may have any number of protruding acceptor ports to mate with a connecting tube. For example, the joint may have at least one, two, three, four, five, six, seven, eight, nine, ten, twelve, fifteen, twenty, thirty, or fifty acceptor ports, or prongs. The joint may have less than any of the number of acceptor ports described herein. The joint may have a number of acceptor ports falling into a range between any two of the values described herein.

The joint may have a central region or hub **202.** Acceptor ports **203** may protrude from the central region. The central region or hub may be the portion of the joint where the acceptor ports meet. The central region or hub may have an interior region. For instance, the central region or hub may be hollow. An acceptor port may have a proximal end closer to the central region or hub. The acceptor port may have a distal end further from the central region or hub. Each acceptor port may be configured to engage with a connecting tube. An end of a connecting tube may be connected to a single acceptor port. In some examples, the connecting tube may have multiple ends. Each end may be connected to a joint. A joint may connect multiple connecting tubes to one another. In some examples, a joint may connect two, three, four, five, six, seven, eight, nine, ten or more connecting tubes to one another.

The protruding acceptor ports may have any angle relative to each other in three dimensional space, for example the angle between any two ports may be at least about 1 °, 5 °, 10°, 15 °, 20 °, 30 °, 45 °, 60 °, 75 °, 90 °, 105 °, 120 °, 135 °, 150 °, 165 °, or 180 °. In some instances, three or more ports may be provided. The three or more ports may or may not be coplanar. The ports may be able to accept round, square, oval, or irregularly shaped tubes. Different cross-sectional shapes/dimensions for connecting tubes, ports may be configured to accommodate the different shapes/dimensions of tubes, the ports themselves may have different cross-sectional shapes/dimensions. The ports may be round, square, oval, or irregularly shaped.

A joint may have a protrusion designed to fit inside of a connecting tube. The protrusion may be a portion of an acceptor port. The protrusion may be tapered to provide a smooth stiffness transition when inserted in a connecting tube. For example, the diameter of the protrusion may increase slightly closer to the central region or hub. The diameter of the protrusion at a distal end of the protrusion may be less than a diameter of the protrusion at a proximal end of the protrusion. The ports have dimensions such that the protrusions of the ports can fit inside of a connecting tube for the purpose of engagement of the inner surface area of a connecting tube.

The joint may also have a lip designed to fit over a portion of the connecting tube. The lip may be a portion of the acceptor port. The ports may have a dimension such that the connecting tube can fit inside the lip for purpose of engagement of the outer surface of the connecting tube. A snug fit may be provided.

In the case of carbon tubes, engagement on the inside surface of a tube may be tighter because carbon tubes can be fabricated by winding of composite material over a mandrel. The fabrication method of winding over a mandrel can permit higher precision of the inside tube diameter than the outer diameter. Therefore the joint protrusion for engagement with the inner surface of the tube may be designed with a narrower tolerance.

The diameter of the protrusion designed to fit inside of a connecting tube may be at least about 1/16", 1/8", 1/4", 1/2", 1", 2", 3", 4", 5", 10", 15", or 20". Alternatively, the diameter of the protrusion may be less than any of the values described herein. The protrusion may be tapered so that its diameter varies along its length.

A single joint may have protrusions with non-equal diameters. For example, the joint shown in FIG. 2c shows a joint **205** designed to accept tubes of different diameters with a smaller tube being accepted at the upper port **206** and larger tubes accepted at the lower ports **207.** In another example, different ports on the same joint may be able to accept tubes with a diameter ratio between different tubes of 1:2, 1:3, 1:4, 1:5, 1:6, 2:3, 2:5, 2:7, 3:5, or 3:7. Furthermore, tubes with different cross sectional shapes may be able to fit on to different protrusions on the same joint. For example, a joint may have protrusions with all or any combination of round, oval, square, rectangular, or irregularly shapes. In other implementations, a single joint may have protrusions with equal diameters and/or the same shape.

Furthermore, the joint may be configured to fit over a connecting tube as well as inside the tube. For example, an acceptor port of the joint may include an inner protrusion **208** and an outer protrusion **209** that forms a ring around at least a portion of the inner protrusion. The inner protrusion may be capable of being inserted into the connecting tube while the outer protrusion may overlie a portion of the connecting tube. At least a portion of the inner protrusion may contact an inner surface of a connecting tube while at least a portion of the outer protrusion may contact an outer surface of the connecting tube. At least a portion of the inner protrusion and at least a portion of the outer protrusion may simultaneously contact the inner and outer surfaces of the connecting tube at the same end. In this design, the connecting tube can be surrounded on opposite sides by the joint when the tube and joint are connected so that the joint engages both the inner and outer diameter of the connecting tube. Both an inner and outer surface of an end of the tube may contact a portion of the joint. The contact may include a full surface contact, or a partial contact.

In the joint design configured to engage both the inner and outer diameter of the tube, the joint may have a first tubular protrusion that extends from a central hub, or body of the joint. The protrusion can comprise the inner protrusion and the outer protrusion. The inner protrusion can be inside of the outer protrusion, with an annular region or groove separating the inner protrusion and the outer protrusion. The outer protrusion may be a lip that does not extend as far as the inner protrusion. The inner protrusion and the outer protrusion can be co-axial or concentric such that the radial thickness of the annular region may be uniform around the circumference of the inner protrusion. The inner protrusion and the outer protrusion may be arranged concentrically.

The inner protrusion may extend further (away from the body of the joint) than the outer protrusion. The inner protrusion may thus have a greater length than the outer protrusion. In some instances, the ratio of lengths between the outer protrusion and the inner protrusion may be less than or equal to about 1:1, 1:2, 1:3, 1:4, 1:5, 1:6, 1:7, 1:8, 1:10, 1:12, 1:15, 1:20, 1:25, 1:30, or 1:50. The inner protrusion may be solid. Alternatively the inner protrusion may be hollow with a wall thickness of about 1/16", 1/8", 1/4", 1/2", 1", 2", 3", 4", or 5". The outer protrusion may have a wall thickness of 1/16", 1/8", 1/4", 1/2", 1", 2", 3", 4", or 5". The outer protrusion may be a lip that only covers a small portion of the connecting tube.

FIG. 2d shows a cross sectional view of a joint connected to two or more tubes. The cross sectional view shows the inner protrusion fitted inside of the tube **212.** The outer protrusion **209** can be fitted over at least a portion of an outer surface of the tube **212.** The diameter of the region designed to fit over the outer diameter of a connecting tube may be at least 1/16", 1/8", 1/4", 1/2", 1", 2", 3", 4", 5", 10", 15", or 20".

A snug fit may be provided between the inner protrusion **208** and the connecting tube **212.** Similarly, a snug fit may be provided between the outer protrusion **209** and the connecting tube. A portion of the end of the connecting tube may be sandwiched between the inner protrusion and the outer protrusion. The inner and outer protrusions may pinch over the terminal end of the connecting tube.

An annular space **210** may be provided between the inner and outer protrusions. The annular space may form a groove or channel between the inner and outer protrusions. The annular region may provide a space for insertion of at least a portion of a connecting tube. When the tubes and joints are assembled the tube may be pushed some distance into the annular space between the inner and outer protrusions. The tube may be pushed into the annular region only part of the way or the tube may be pushed in such that the end of the tube contacts the back of the annular region (joint body).

The joint may mate with the inside of the tube and the outside of the tube. Each end of a tube may be accepted by an acceptor port of a joint that may simultaneously contact the inner and outer surfaces of the tube at the respective end. Engagement with both the inside and outside of the tube may result in greater structural strength. The joint protrusion may enter into a connecting tube at least 1/2", 1", 2", 3", 4", or 5". The region of the joint that covers over the outer diameter of the tube may cover a tube length of at least 1/2", 1", 2", 3", 4", or 5". The ratio of the length of the tube that is engaged on the outer diameter surface compared to the engagement of the inner diameter surface may be about 1:1, 1:2, 2:3, 1:3, 1:4, 1:5, 2:1, 3:2, 3:1, 4:1, or 5:1. The joint dimensions may be determined by the adhesive volume required to bind the joint/tube assembly with sufficient structural rigidity for the intended use.

The joint may be fabricated from a single integral piece of metallic material (e.g. aluminum, titanium, or stainless steel, brass, copper, chromoly steel, or iron), a composite material (e.g. carbon fiber), or a polymeric material (e.g. plastic). For example the joint body, inner protrusion, and outer protrusion may all be formed from a single piece of material. Alternatively the joint body, inner protrusion, and outer protrusion could be machined separately and connected after fabrication, for example by welding. The joint protrusion and body may be permanently affixed to each other. Portions of the joint may be immovable relative to the rest of the joint. When a joint/tube assembly is formed, the assembly may be rigid and joints may prevent tubes from moving relative to each other.

The inner protrusion **208** of the joint, designed to enter into a connecting tube **212,** may have centering features. Centering features may be a raised pattern on the joint protrusion designed to fit inside of a connecting tube. The centering feature may be raised from an outer surface of the inner protrusion. Optionally, centering features may be on the inside region of the outer protrusion. In some implementations, the centering features may be raised from both an outer surface of the inner protrusion and an inner surface of the outer protrusion of the acceptor port. The height of a raised centering feature may be at least 0.001", 0.005", 0.006", 0.007", 0.008", 0.009", 0.010", 0.020", 0.030", 0.040", or 0.050".

The centering features can provide alignment of the inner protrusion within the tube when the inner protrusion is inserted into a tube to form a frame assembly. The centering features can be raised from the surface of the protrusion such that the minimum tube diameter that can be fitted onto the outer protrusion is limited by the height of the centering features. Space can be provided between the centering features such that a gap exists between the surface of the inner protrusion from which the centering features are raised and the inner surface of a tube fitted on the inner protrusion of the joint. Adhesive can be provided in the gap to bind the joint to the tube. Alternatively the joint and tube can be connected without providing adhesive in the gap. In cases where adhesive is not provided, a tube and a joint can be removably connected. Adhesive can be omitted when the tube and joint are assembled for use in scenarios where the stress (e.g., compressive, tensile, and/or torsional stress) on the tube and joint connection is below a threshold value. In some cases, a press-fit connection can be formed between the joint and a connecting tube. The press-fit connection can permit a tight connection between the joint and the tube without adhesive. In some cases, the centering features may or may not deform when the tube is fitted over the inner protrusion.

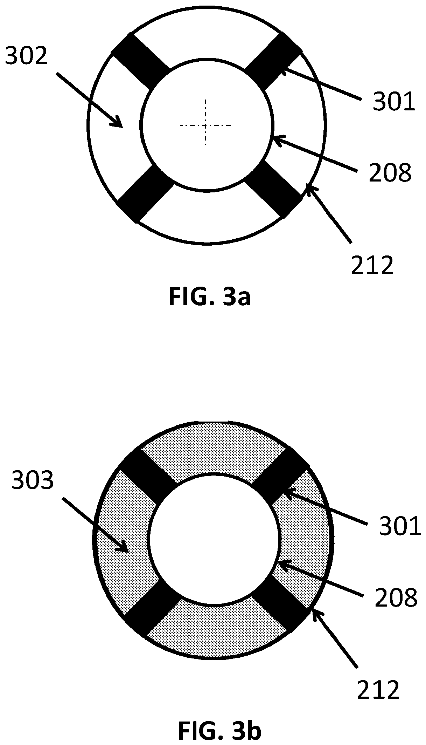

FIG. 3a shows a schematic cross sectional view of an inner protrusion **208** fitted in a tube **212.** The cross section shown in FIG. 3a is taken along a plane that cuts through a central axis of the inner protrusion. One or more centering features **301** can extend from the surface of the inner protrusion. The one or more centering features can contact the inner diameter of the tube. The one or more centering features can be spaced along the surface of the inner protrusion such that one or more gaps **302** are formed between the surface of the inner protrusion and the inner surface of the tube. At least about 50% of the surface of the inner protrusion can be covered by a gap, the remaining 50% of the surface can be covered by a centering feature. At least about 60% of the surface of the inner protrusion can be covered by a gap, the remaining 40% of the surface can be covered by a centering feature. At least about 80% of the surface of the inner protrusion can be covered by a gap, the remaining 20% of the surface can be covered by a centering feature. At least about 90% of the surface of the inner protrusion can be covered by a gap, the remaining 10% of the surface can be covered by a centering feature. At least about 99% of the surface of the inner protrusion can be covered by a gap, the remaining 1% of the surface can be covered by a centering feature. The centering features can be arranged symmetrically around the surface of the inner protrusion. The centering features can be arranged asymmetrically around the surface of the inner protrusion. The centering features can be arranged around the surface of the inner protrusion such that all of the gaps formed have the same volume and dimension. Alternatively, the centering features can be arranged around the surface of the inner protrusion such that at least a fraction of the gaps formed have the different volumes and/or dimensions.

An adhesive can be provided to in one or more of the gaps. FIG. 3b shows adhesive 303 filling a space in the one or more gaps formed between the surface of the inner protrusion and the inner surface of the tube. The adhesive can contact the surface of the inner protrusion. The adhesive can contact the one or more centering features. The adhesive can contact the inner surface of the tube. The adhesive can bind to the surface of the inner protrusion. The adhesive can bind to the one or more centering features. The adhesive can bind to the inner surface of the tube. The adhesive can form a bond between the inner protrusion and a tube fitted on the inner protrusion. The adhesive can surround one or more of the centering features such that after the adhesive sets (e.g., hardens) it may be difficult to separate the tube from the inner protrusion because the centering features may be imbedded in the adhesive.

The adhesive can be a flowable adhesive. The adhesive can have a liquid or paste-like consistency. The adhesive can harden after exposure to air and/or heat. The adhesive can be a medium viscosity adhesive. In some cases, the adhesive can have a viscosity measured at 25°C of at least about 1,000 cP, 5,000 cP, 10,000 cP, 15,000 cP, 20,000 cP, 25,000 cP, 30,000 cP, 35,000 cP, 40,000 cP, 45,000 cP, 50,000 cP, 55,000 cP, 60,000 cP, 65,000 cP, 70,000 cP, 75,000 cP, 80,000 cP, 85,000 cP, 90,000 cP, 95,000 cP, 100,000 cP, 110,000 cP, 120,000 cP, 130,000 cP, 140,000 cP, or 150,000 cP. The adhesive can have a viscosity less than 1,000 cP. The adhesive can have a viscosity greater than 150,000 cP. The adhesive can have a viscosity between any of the values listed. In some cases, the adhesive can be a two part expoxy comprising a resin and a hardener. Each of the resin and the hardener can have a viscosity of any the values listed. Each of the resin and the hardener can have a viscosity between any of the values listed. In some embodiments, the resin and hardener may be injected into the joint via separate injecting port, such that the resin and hardener are not mixed together until injected into the channel. Alternatively, the resin and hardener are premixed and the mixture of the two parts is injected into the channel.

The adhesive can be introduced into the gaps by providing a pressure gradient between a source of the adhesive and the gap. The adhesive can be introduced into the gaps by sucking the adhesive into the gaps. The adhesive can be introduced into the gaps by injecting the adhesive into the gaps. The adhesive can flow in a direction from high pressure to low pressure. In some cases, the joints can comprise one or more injection ports and/or one or more vacuum ports configured to facilitate introduction of adhesive into the one or more gaps.

Adhesive may be injected into the space by vacuum or pressure injection. In the case of vacuum injection at least one port may be connected to a low pressure source and at least one other port may be connected to an adhesive reservoir, upon engagement of the low pressure source adhesive may be sucked into the space from the reservoir. Alternatively a port may be connected to a positive pressure source and adhesive may be pushed into the space.

Joints may be fabricated with one or more integrated fluid delivery ports. Each of the fluid delivery ports can be an injection port and/or vacuum port. The injection port and/or vacuum port may connect to the pressure source, vacuum source, and/or adhesive reservoir. The injection port and/or vacuum port may stick out of the joint. Alternatively, the injection port and/or vacuum port need not protrude from the joint. The injection port and/or vacuum port may include an opening that may be fluidically connected to an internal space between a tube and one or more protrusions of the joint. The injection port and/or vacuum port may be in fluid communication with a fluid delivery path. One or more of the fluid delivery ports can be in connection with the fluid delivery path along the length of the path. An injection port and/or vacuum port may be formed with an internal channel that is in fluid communication with an annular region of the inner protrusion and/or a surface of the inner protrusion. The internal channel may be in fluid communication with an exterior surface of an inner protrusion of the acceptor port. The internal channel may or may not be in fluid communication with an interior surface of an outer protrusion of an acceptor port. The use of injection port and/or vacuum port may simplify the injection process by removing the need for specific hardware or tools; for example fittings, nozzles, or syringes. The injection port and/or vacuum port may be removed after assembly of a structure. For example, after the adhesive has been inserted and/or hardened, the injection port and/or vacuum port may be removed. The injection port and/or vacuum port may extend from the protrusion 1/16", 1/8", 1/4", 1/2", 1", 2", 3", 4", 5", or 10". Similarly the injection port and/or vacuum port may have a diameter of 1/16", 1/8", 1/4", 1/2", 1", 2", 3", 4", 5", or 10".

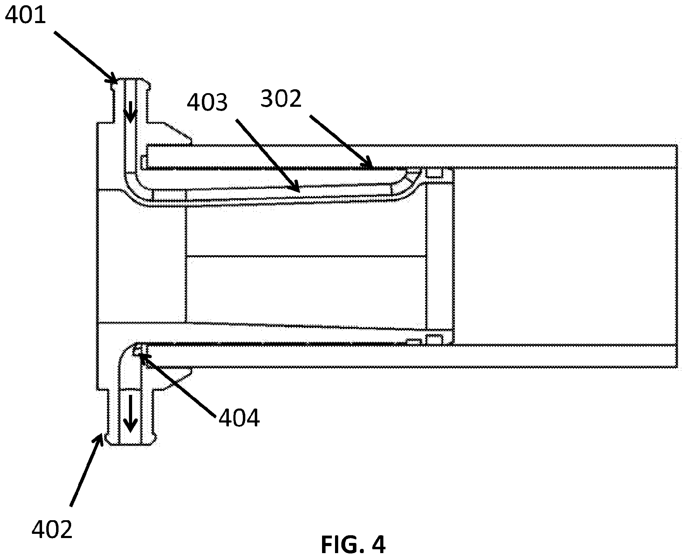

FIG. 4 shows a cross sectional view of a tube fitted on an acceptor port with the cross section taken along a mid-plane parallel to the length of the acceptor port. The inner protrusion of the acceptor port is fitted in the tube. The outer protrusion of the acceptor port is fitted over the outside of the tube. The centering features **301** form a plurality of gaps **302** between the inner protrusion and an inner surface of the tube. The acceptor port has an injection port **401** and a vacuum port **402.** The injection port and the vacuum port can be integrated with the acceptor port. The injection port and the vacuum port can be permanently attached to the acceptor port. The injection port and the vacuum port can be removable from the acceptor port. In some cases, one or both of the injection port and the vacuum port can be permanently removed from the acceptor port after adhesive is provided to the plurality of gaps. In some cases, the injection port and the vacuum port may be interchangeable such that an injection port can be also used as a vacuum port.

The injection port and the vacuum port can be in fluid communication with one or more of the gaps in the plurality of gaps. The injection port can be in fluid communication with the plurality of gaps through a fluid delivery path **403** that can include one or more channels, pipes, ducts, grooves, and/or tubes. The fluid delivery path can permit transmission of adhesive from the injection port to one or more of the gaps. The fluid delivery path can be at least partially built into the inner protrusion. The fluid delivery path can be a through hole that connects to the injection port on one side and opens to one or more gaps in the plurality of gaps on an opposite side. The through hole can extend through at least a portion of a wall of the inner protrusion.

The fluid delivery path can be coated such that adhesive does not adhere to the inside of the through hole while the transmitting adhesive from the injection port to the one or more gaps. The coating can prevent the fluid delivery path from becoming clogged with adhesive. In some cases, the coating can be a chemical coating. Alternatively, or additionally the fluid delivery path can be polished with a finish that prevent adhesive from adhering to the inside of the through hole.

Similarly, the vacuum port can be in fluid communication with one or more of the gaps in the plurality of gaps. The vacuum port can be in fluid communication with the plurality of gaps through a vacuum delivery path **404** that can include one or more channels, pipes, ducts, grooves, and/or tubes. The vacuum delivery path may not include a passage through the side wall of the inner protrusion. The vacuum delivery path can be shorter than the fluid delivery path. The vacuum delivery path can permit a pressure drop to be generated in the one or more gaps to pull or suck adhesive into the one or more gaps. The pressure drop can be generated by connecting a vacuum to a vacuum port in communication with the vacuum delivery path.

In some embodiments, the joint may have two or more injection ports for separate parts of adhesives. In some cases, the adhesive can be a two part expoxy comprising a resin and a hardener. Each of the resin and the hardener can have a viscosity of any the values listed. In some embodiments, the resin and hardener may be injected into the joint via separate injection port, such that the resin and hardener are not mixed together until injected into the channel.

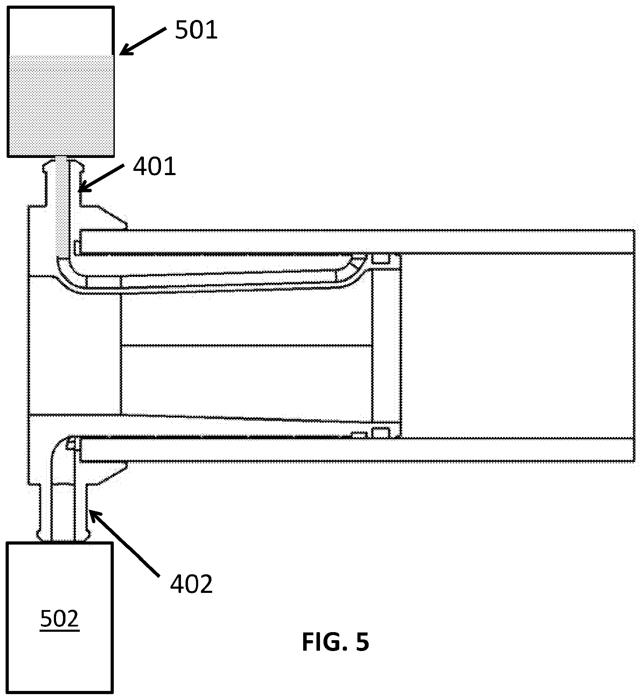

During injection of adhesive into the one or more gaps, an adhesive source can be connected to the injection port and a vacuum source can be connected to the vacuum port. In some cases, the one or more gaps can be completely filled with adhesive such that the volume of adhesive provided is 100% of the volume of the gaps. Alternatively the gaps can be less than completely full such that the volume of adhesive provided is about 90%, 80%, 70%, 60%, 50%, 40%, 30%, 20%, 10%, or 5% of the volume of the gaps FIG. 5 shows an adhesive source **501** connected to an injection port **401.** The adhesive source can be a container that has a capacity to hold a volume of adhesive larger than the volume of adhesive needed to fill the one or more gaps. The same container can be used repeatedly to fill the one or more gaps of different connector ports. Each time the container is used a fraction of the total volume of adhesive in the container can be provided to the one or more gaps. Alternatively, the container can have a volume that is about equal to the volume needed to fill the one or more gaps associated with a single connection port. The container can have a volume larger than the volume needed to fill the one or more gaps but the amount of adhesive in the container can be about equal to the amount of adhesive needed to fill the one or more gaps. When the container has a volume that is about equal to the volume needed to fill the one or more gaps the adhesive can be injected from the container to the one or more gaps without monitoring the total amount of adhesive that has been injected to the one or more gaps. The container that has a volume of adhesive about equal to the volume needed to fill the one or more gaps can deliver a volume of adhesive needed to fill the gaps without spilling out excess adhesive or providing too little adhesive. A desired amount of adhesive can be delivered to the one or more gaps without monitoring the total amount of adhesive that is injected.

In some cases, the container can be a bag. The container can be collapsible. Alternatively the container can be rigid. The container can enclose a volume of adhesive that is substantially free from air. The container can form an air tight seal with the injection port. In some cases, the container can connect directly to the injection port. The container can connect to the injection port through a tube or hose. The air tight seal between the container and the injection port can prevent air from mixing with the adhesive. The air tight seal between the container and the injection port can permit delivery of adhesive that is substantially free from air to the one or more gaps. When air is mixed with the volume of the adhesive a bond that is formed by the adhesive between the acceptor port and the tube can be structurally compromised. Providing the adhesive in the container that encloses a volume of adhesive that is substantially free from air can further reduce introduction of air into the one or more gaps. In some cases, a joint can comprise one or more vents that permit air to be pushed out of the one or more gaps as adhesive enters the gap which can further permit evacuation of air in the gap.

A vacuum source **502** can be connected to a vacuum port **402.** The vacuum port can be connected directly to the vacuum source. Alternatively, the vacuum port can be in fluid communication with a vacuum source through a fluid connection element such as a tube or a pipe. The vacuum source can be a vacuum pump. The vacuum source can be a negative pressure source.

One or more vacuum ports **402** and one or more injection ports **401** may be positioned on opposite sides of the joint to distribute adhesive uniformly. In some cases the vacuum port can be oriented such that the vacuum port applies negative pressure in a downward direction towards the center of the earth such that gravity can assist in pulling the adhesive. One or more vacuum ports **402** and one or more injection ports **401** may be positioned symmetrically around the joint to distribute adhesive uniformly. For example, they may be provided circumferentially opposing one another on an acceptor port of a joint. They may be provided at or near a proximal end of an acceptor port for a joint. Alternatively, they may be provided at or near a distal end of an acceptor port of the joint, or any combinations thereof. A joint may have at least about 1, 2, 3, 4, 5, 10, 15, or 20 vacuum ports or injection ports on each protrusion. Vacuum and injection ports can be positioned far from, in close proximity to, or co-axially with an internal joint feature such as the fluid pathway inside of a wall of the inner joint protrusion, which may provide uniform adhesive coating. Optionally, the vacuum and injections ports may be alternatingly positioned in close proximity or co-axially with the internal node features. Vacuum and injection ports can be optimally positioned on a node to enable usage of a combined vacuum/injection tool with set vacuum/injection port spacing and geometry. The number of vacuum ports and injection ports may not necessarily have to be equal. Implementations with one vacuum port and multiple injection ports, or one injection port and multiple vacuum ports may be possible.

Once the adhesive is provided to the one or more gaps the adhesive can dry, harden, set, and/or cure. In some cases, the adhesive can set in a heated environment. The adhesive can set at room temperature. The adhesive can set in a time scale on the order of seconds, minutes, hours, or days.

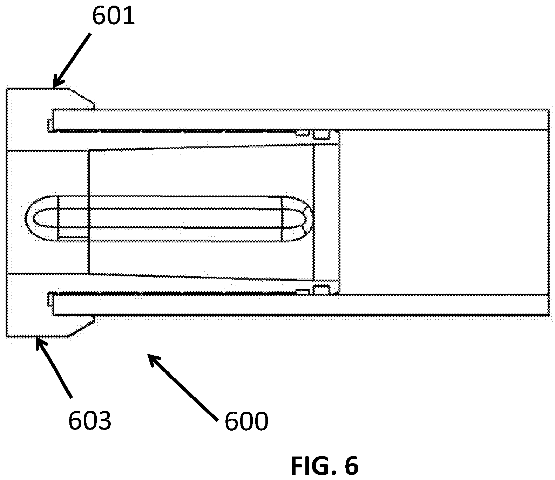

After adhesive is injected into the one or more gaps through the injection port, the injection port and/or vacuum port can be removed. The injection port and/or vacuum port can be cut off, burned off, melted off, or otherwise removed from the joint protrusion. The injection port and/or vacuum port can be removed from the joint protrusion after the adhesive sets. FIG. 6 shows a join protrusion **600** with a removed injection port and/or vacuum port. For example, an injection port may be removed from the surface **601** and a vacuum port may be removed from the surface **603.**

In some cases, the viscosity of the adhesive can be a function of the temperature of the adhesive. One or both of the adhesive and/or the joint into which the adhesive is injected can be heated or cooled to increase or decrease the viscosity of the adhesive.

The joint can be formed from a material with high thermal conductivity. The joint can be easily heated or cooled by a heating or cooling device. The joint can have a higher thermal conductivity than the adhesive. The joint can be heated prior to or during injection of adhesive into the one or more gaps. The joint can be heated by conduction, convection, and/or radiation. The joint can be heated by a heat exchanger coil. The joint can be heated by a resistive heater. The joint can be heated by immersing the joint into a warm liquid bath. The joint can be heated with a source of warm air, for example a heat gun.

When the joint is heated the temperature of the joint can reach at least about 50°C, 60°C, 70°C, 80°C, 90°C, 100°C, 110°C, 120°C, 130°C, 140°C, 150°C, 160°C, 170°C, 180°C, 190°C, 200°C, 250°C, 300°C, 350°C, 400°C, 450°C, or 500°C. The joint can be heated by directing a heat gun at the joint for a given time interval. In some cases, a heat gun can be directed at the joint for at least about 1 minute. In some cases, a heat gun can be directed at the joint for at least about 5 minutes. In some cases, a heat gun can be directed at the joint for at least about 10 minutes. In some cases, a heat gun can be directed at the joint for at least about 20 minutes. In some cases, a heat gun can be directed at the joint for at least about 30 minutes. The joint can be heated by the heat gun and then adhesive can be injected into the joint protrusion sequentially. The joint can be heated by the heat gun while the adhesive is injected.

In some cases, the adhesive can be heated. The adhesive can be heated instead of heating the joint or in addition to heating the joint. The adhesive can be heated by conduction, convection, and/or radiation. The adhesive can be heated by a heat exchanger coil. The adhesive can be heated by a resistive heater. The adhesive can be heated by immersing the adhesive into a warm liquid bath. The adhesive can be heated with a source of warm air, for example a heat gun.

The centering features can facilitate flow of the adhesive from the injection port to the one or more gaps. The centering features can direct the flow of adhesive within the one or more gaps such that the adhesive is spread consistently and uniformly between the one or more gaps. The centering features can have shapes and patterns that facilitate adhesive flow.

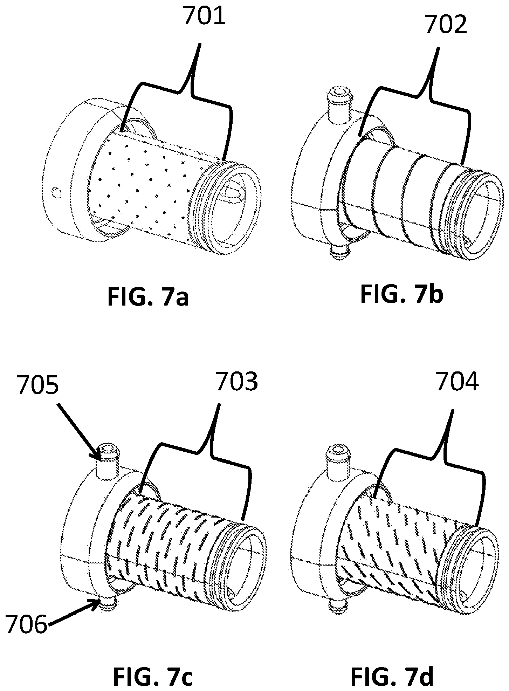

FIGs. 7a-d show detailed views of four possible joint centering feature embodiments. The centering features can be on at least a fraction of the surface of the inner protrusion. The centering features can be on a surface of the inner protrusion that is opposite an inner surface of the tube when a tube is fitted on the inner protrusion. The surface of the inner protrusion that is opposite an inner surface of the tube when a tube is fitted on the inner protrusion can comprise a tube engagement region of the inner protrusion.

FIG. 7a shows a small nub centering feature **701,** this feature comprises a pattern of raised dots on a tube engagement region of the joint protrusion. A tube engagement region of the joint protrusion may be a portion of the joint protrusion configured to come into contact with a surface of the tube. The tube engagement region may be configured to be inserted into the tube. The dots may be provided in one or more row or column, or in staggered rows and/or columns. The raised dots may have a diameter of at least 0.001", 0.005", 0.006", 0.007", 0.008", 0.009", 0.010", 0.020", 0.030", 0.040", or 0.050". When adhesive is injected into the joint protrusion the adhesive can fill one or more spaces between the raised dots. The centering feature may allow the adhesive to flow easily in the one or more gaps with little hindrance or resistance.

FIG. 7b shows a spiral path centering feature **702,** this feature comprises a continuous raised line that winds around the full length of the tube engagement region of the joint protrusion. The continuous raised line may wrap around the tube joint protrusion a single time or multiple times. Alternative designs may comprise centering features with a raised spiral centering feature that does not wrap around the full diameter of the tube engagement region. In alternative embodiments the spiral centering feature may wind around 10 °, 20 °, 30 °, 40 °, 50 °, 60 °, 70 °, 80 °, 90 °, 100 °, 110 °, 120 °, 130 °, 140 °, 150 °, 180 °, 190 °, 200 °, 210 °, 220 °, 230 °, 240 °, 250 °, 260 °, 270 °, 280 °, 290 °, 300 °, 310 °, 320 °, 330 °, 340 °, 350 °, or the full 360 ° of the circumference of the engagement region. The centering feature may further comprise multiple raised lines that wind around the full length of the tube without intersecting in a fashion similar to multi-start screw threads. When a tube is fitted on the tube engagement region of the inner protrusion, the raised spiral centering feature can create a channel for adhesive to flow along and fill the tube engagement region. The centering features may force the adhesive to fill all of the gaps.

FIG. 7c shows a labyrinth centering feature **703,** this feature comprises raised dashed lines circumscribing the tube engagement region of the joint at a 90 degree angle to the direction of the length of the joint protrusion. Adjacent dashed lines in the labyrinth centering feature are organized in a staggered pattern. Multiple rows of dashed lines may be provided. The dashed lines may be substantially parallel to one another. Alternatively, varying angles may be provided.

FIG. 7d shows an interrupted helix centering feature **704,** this feature comprises raised dashed lines circumscribing the tube engagement region of the joint at a 45 degree angle to the direction of the length of the tube engagement region. In another example, the centering feature could have a raised line circumscribing the tube engagement region at an angle of 1 °, 5 °, 10°, 15 °, 20 °, 30 °, 45 °, 60 °, 75 °, 90 °, 105 °, 120 °, 135 °, 150 °, 165 °, or 180 °. The dashed lines in the centering features shown in FIG. 3c and FIG 3d may have a length of at least 0.005", 0.006", 0.007", 0.008", 0.009", 0.010", 0.020", 0.030", 0.040", 0.050" or 0.100".

Other patterns in addition to those described in FIG. 7a-FIG. 7d may be used. Alternative patterns may include dashed lines at irregular angles or spacing, a combination of lines and dots, or a group of solid lines winding around the engagement region with uniform or non-uniform spacing between the lines. In some instances, the centering features may be patterned so a direct straight line may not be drawn from a distal end of an inner protrusion to the proximal end without intersecting one or more centering feature. The centering features can be arranged to force adhesive to take a more roundabout path between the one or more gaps and/or encourage spreading of the adhesive, as described further elsewhere herein. Alternatively, a straight line may be provided from a distal end to a proximal end of the inner protrusion without intersecting one or more centering feature.

The centering features may be added to the joint inner protrusion with different densities. For example, a joint inner protrusion may be fabricated such that 90% of the protrusion is covered with raised centering features. In the case with 90% centering feature coverage the features may be very closely spaced. Alternatively the centering features may cover at least 5%, 10%, 15%, 20%, 25%, 30%, 40%, 45%, 50%, 55%, 60%, 65%, 70%, 75%, 80%, 85%, 90%, or 95% of the protrusion. The centering features may cover less than any of the percentages described herein. The centering features may fall within a range between any two of the percentage values described herein.

The centering features may be raised such that a joint/tube assembly comprises space between an inner surface of the connecting tube and the surface of the joint protrusion designed to enter into a connecting tube. The tolerance between the inner tube diameter and the protrusion may be such that the joint and tube form a force fit connection. In the case of a force fit connection, centering features may or may not deform upon tube insertion in to the joint. The centering features may center the joint protrusion inside of a connecting tube such that the distance between the inner surface of the connecting tube and the surface of the joint protrusion may have a uniform radial thickness. Alternatively the centering features may encourage non-uniform distribution of the space between the joint protrusion and the connecting tube.

The distribution of the adhesive in the space may be influenced by the centering features. For example, a nub centering feature may permit maximum bond area between the joint and tube. In another case, a spiral path centering feature may generate a long path for the adhesive to flow. A spiral path centering feature may be preferable in embodiments where the adhesive needs to fill a space far from the injection site. In another case, a labyrinth centering feature may force uniform distribution of the adhesive around the tube. A labyrinth centering feature may be preferable in embodiments where uniform distribution of the adhesive is desired for structural stability. Labyrinth and interrupted helix centering features may force the adhesive to uniformly distribute upon injection by creating an internal fluid path for the adhesive which may traverse the space uniformly. In some instances, the centering features may be configured to force the adhesive to travel circumferentially around the tube. The centering features may also be configured to force the adhesive to travel along the length of the tube. Preferably, centering features may be configured to cause the adhesive to spread evenly along the surface of the tube, which may include both the circumferential and lengthwise spreading of the adhesive.

The joint **703** shows exemplary injecting port **705** and vacuum port **706.** The injecting port and vacuum port can be the same as described in FIG. 4.

## Claims

1. A joint member for forming a connection between two or more tubes, the joint member comprising:
two or more acceptor ports (203), wherein each acceptor port is formed with an inner protrusion (208) that (1) is configured to be fitted inside a corresponding tube of the two or more tubes when the joint (102) is connected to the corresponding tube and (2) includes one or more fluid delivery paths (403) built into a side wall of the inner protrusion (208); and
one or more fluid delivery ports that are in fluid communication with a space between an inner surface of the corresponding tube and an outer surface of the inner protrusion (208) when the joint (102) is connected to the corresponding tube, said fluid communication provided through the one or more fluid delivery paths (403) built into the side wall of the inner protrusion (208).

2. The joint member of claim 1, wherein at least one of the one or more fluid delivery ports is an adhesive injection port.

3. The joint member of claim 1, wherein at least one of the one or more fluid delivery ports is a vacuum port (402).

4. The joint member of claim 1, wherein at least one of the one or more fluid delivery ports is in fluid communication with a container that holds a volume of adhesive.

5. The joint member of claim 4, wherein the volume of adhesive is substantially equal to an amount of adhesive needed to fill the space between the inner surface of the corresponding tube and the outer surface of the inner protrusion (208) when the joint (102) is connected to the corresponding tube.

6. The joint member of claim 4, wherein the container that holds a volume of adhesive is in fluid communication with the fluid delivery port with an air tight sealed connection.

7. The joint member of claim 1, wherein at least a portion of the outer surface of the inner protrusion (208) comprises one or more centering features.

8. The joint member of claim 7, wherein the one or more centering features force a predetermined spacing distance between the outer surface of the inner protrusion (208) and the inner surface of the corresponding tube.

9. The joint member of claim 7, wherein the one or more centering features provide one or more channels to spread adhesive injected into the space between the inner surface of the corresponding tube and the outer surface of the inner protrusion (208).

10. A method of forming a bond between a joint and a corresponding tube connected to the joint, the method comprising:
fitting an inner protrusion (208) of the joint (102) into the corresponding tube, wherein the inner protrusion (208) includes one or more fluid delivery paths (403) built into a side wall of the inner protrusion (208) that provide a channel from one or more fluid delivery ports provided on the joint (102) to a space between an inner surface of the corresponding tube and an outer surface of the inner protrusion (208);
heating at least a portion of the joint (102) to a surface temperature of at least about 50°C;
attaching (1) an adhesive source to at least one of the fluid delivery ports and (2) a negative pressure source to at least one of the fluid delivery ports; and
injecting adhesive into the space between the inner surface of the corresponding tube and the outer surface of the inner protrusion (208) by (1) providing adhesive from the adhesive source through the at least one fluid delivery ports and (2) pulling adhesive into the space by the negative pressure source on the at least one of the fluid delivery port.

11. The method of claim 10, further comprising removing the one or more fluid delivery ports provided on the joint (102) after the adhesive sets.

12. The method of claim 10, wherein at least a portion of the surface of the inner protrusion (208) comprises one or more centering features.

13. The method of claim 12, wherein the centering features force a predetermined spacing distance between the surface of the inner protrusion (208) and an inner surface of the corresponding tube.

14. The method of claim 12, wherein the centering features provide one or more channels to spread adhesive injected into the space between the inner surface of the corresponding tube and the outer surface of the inner protrusion (208).

15. The method of claim 10, wherein the adhesive has a viscosity of at least about 1,000 cP measured at 25°C.

## Patentansprüche

1. Verbindungselement zum Bilden einer Verbindung zwischen zwei oder mehr Rohren, wobei das Verbindungselement umfasst:
zwei oder mehr Aufnahmeöffnungen (203), wobei jede Aufnahmeöffnung mit einem inneren Vorsprung (208) gebildet ist, der (1) konfiguriert ist, um in ein entsprechendes Rohr der zwei oder mehr Rohre eingepasst zu werden, wenn das Verbindungsstück (102) mit dem entsprechenden Rohr verbunden wird, und (2) einen oder mehrere Fluidabgabewege (403) einschließt, die in eine Seitenwand des inneren Vorsprungs (208) eingebaut sind; und
eine oder mehrere Fluidabgabeanschlüsse, die mit einem Raum zwischen einer Innenfläche des entsprechenden Rohrs und einer Außenfläche des inneren Vorsprungs (208) in Fluidverbindung stehen, wenn das Verbindungsstück (102) mit dem entsprechenden Rohr verbunden ist, wobei die Fluidverbindung durch den einen oder die mehreren Fluidabgabewege (403) bereitgestellt wird, die in die Seitenwand des inneren Vorsprungs (208) eingebaut sind.

2. Verbindungselement nach Anspruch 1, wobei mindestens einer des einen oder der mehreren Fluidabgabeanschlüsse ein Klebstoffeinspritzanschluss ist.

3. Verbindungselement nach Anspruch 1, wobei mindestens einer des einen oder der mehreren Fluidabgabeanschlüsse ein Vakuumanschluss (402) ist.

4. Verbindungselement nach Anspruch 1, wobei mindestens einer des einen oder der mehreren Fluidabgabeanschlüsse in Fluidverbindung mit einem Behälter steht, der ein Klebstoffvolumen enthält.

5. Verbindungselement nach Anspruch 4, wobei das Klebstoffvolumen im Wesentlichen gleich einer Klebstoffmenge ist, die benötigt wird, um den Raum zwischen der Innenfläche des entsprechenden Rohrs und der Außenfläche des inneren Vorsprungs (208) zu füllen, wenn das Verbindungsstück (102) mit dem entsprechenden Rohr verbunden ist.

6. Verbindungselement nach Anspruch 4, wobei der Behälter, der ein Klebstoffvolumen enthält, in Fluidverbindung mit dem Fluidabgabeanschluss mit einer luftdicht abgedichteten Verbindung steht.

7. Verbindungselement nach Anspruch 1, wobei mindestens ein Abschnitt der Außenfläche des inneren Vorsprungs (208) ein oder mehrere Zentriermerkmale umfasst.

8. Verbindungselement nach Anspruch 7, wobei das eine oder die mehreren Zentriermerkmale einen vorbestimmten Abstand zwischen der Außenfläche des inneren Vorsprungs (208) und der Innenfläche des entsprechenden Rohrs erzwingen.

9. Verbindungselement nach Anspruch 7, wobei das eine oder die mehreren Zentriermerkmale einen oder mehrere Kanäle bereitstellen, um in den Raum zwischen der Innenfläche des entsprechenden Rohrs und der Außenfläche des inneren Vorsprungs (208) eingespritzten Klebstoff zu verteilen.

10. Verfahren zum Bilden einer Bindung zwischen einem Verbindungsstück und einem entsprechenden mit dem Verbindungsstück verbundenen Rohr, wobei das Verfahren umfasst:
Einpassen eines inneren Vorsprungs (208) des Verbindungsstücks (102) in das entsprechende Rohr, wobei der innere Vorsprung (208) einen oder mehrere Fluidabgabewege (403) einschließt, die in eine Seitenwand des inneren Vorsprungs (208) eingebaut sind und die einen Kanal von einem oder mehreren Fluidabgabeanschlüssen, die an dem Verbindungsstück (102) vorgesehen sind, zu einem Raum zwischen einer Innenfläche des entsprechenden Rohrs und einer Außenfläche des inneren Vorsprungs (208) bereitstellen;
Erhitzen mindestens eines Abschnitts des Verbindungsstücks (102) auf eine Oberflächentemperatur von mindestens etwa 50 °C;
Befestigen (1) einer Klebstoffquelle an mindestens einem der Fluidabgabeanschlüsse und (2) einer Unterdruckquelle an mindestens einem der Fluidabgabeanschlüsse; und
Einspritzen von Klebstoff in den Raum zwischen der Innenfläche des entsprechenden Rohrs und der Außenfläche des inneren Vorsprungs (208) durch (1) Bereitstellen von Klebstoff von der Klebstoffquelle durch den mindestens einen Fluidabgabeanschluss und (2) Ziehen von Klebstoff in den Raum durch die Unterdruckquelle an dem mindestens einen der Fluidabgabeanschluss.

11. Verfahren nach Anspruch 10, ferner umfassend das Entfernen des einen oder der mehreren Fluidabgabeanschlüsse, die an dem Verbindungsstück (102) vorgesehen sind, nachdem der Klebstoff ausgehärtet ist.

12. Verfahren nach Anspruch 10, wobei mindestens ein Abschnitt der Oberfläche des inneren Vorsprungs (208) ein oder mehrere Zentriermerkmale umfasst.

13. Verfahren nach Anspruch 12, wobei die Zentriermerkmale einen vorbestimmten Abstand zwischen der Oberfläche des inneren Vorsprungs (208) und einer inneren Oberfläche des entsprechenden Rohrs erzwingen.

14. Verfahren nach Anspruch 12, wobei die Zentriermerkmale einen oder mehrere Kanäle bereitstellen, um in den Raum zwischen der Innenfläche des entsprechenden Rohrs und der Außenfläche des inneren Vorsprungs (208) eingespritzten Klebstoff zu verteilen.

15. Verfahren nach Anspruch 10, wobei der Klebstoff eine Viskosität von mindestens etwa 1.000 cP, gemessen bei 25 °C, aufweist.

## Revendications

1. Élément de joint destiné à former un raccordement entre au moins deux tubes, l'élément de joint comprenant :
au moins deux orifices accepteurs (203), chaque orifice accepteur étant pourvu d'une saillie intérieure (208) qui (1) est conçue pour être ajustée à l'intérieur d'un tube correspondant des au moins deux tubes lorsque le joint (102) est raccordé au tube correspondant et (2) comporte un ou plusieurs chemins de distribution de fluide (403) intégrés dans une paroi latérale de la saillie intérieure (208) ; et
un ou plusieurs orifices de distribution de fluide qui sont en communication fluidique avec un espace entre une surface intérieure du tube correspondant et une surface extérieure de la saillie intérieure (208) lorsque le joint (102) est raccordé au tube correspondant, ladite communication fluidique étant assurée à travers les un ou plusieurs chemins de distribution de fluide (403) intégrés dans la paroi latérale de la saillie intérieure (208).

2. Élément de joint selon la revendication 1, dans lequel au moins l'un des un ou plusieurs orifices de distribution de fluide est un orifice d'injection d'adhésif.

3. Élément de joint selon la revendication 1, dans lequel au moins l'un des un ou plusieurs orifices de distribution de fluide est un orifice à vide (402).

4. Élément de joint selon la revendication 1, dans lequel au moins l'un des un ou plusieurs orifices de distribution de fluide est en communication fluidique avec un conteneur qui contient un volume d'adhésif.

5. Élément de joint selon la revendication 4, dans lequel le volume d'adhésif est sensiblement égal à une quantité d'adhésif nécessaire pour remplir l'espace entre la surface intérieure du tube correspondant et la surface extérieure de la saillie intérieure (208) lorsque le joint (102) est raccordé au tube correspondant.

6. Élément de joint selon la revendication 4, dans lequel le conteneur qui contient un volume d'adhésif est en communication fluidique avec l'orifice de distribution de fluide à l'aide d'un raccordement étanche à l'air.

7. Élément de joint selon la revendication 1, dans lequel au moins une partie de la surface extérieure de la saillie intérieure (208) comprend un ou plusieurs éléments de centrage.

8. Élément de joint selon la revendication 7, dans lequel les un ou plusieurs éléments de centrage forcent une distance d'espacement prédéfinie entre la surface extérieure de la saillie intérieure (208) et la surface intérieure du tube correspondant.

9. Élément de joint selon la revendication 7, dans lequel les un ou plusieurs éléments de centrage fournissent un ou plusieurs canaux pour étaler l'adhésif injecté dans l'espace entre la surface intérieure du tube correspondant et la surface extérieure de la saillie intérieure (208).

10. Procédé de formation d'une liaison entre un joint et un tube correspondant raccordé au joint, le procédé comprenant :
l'ajustement d'une saillie intérieure (208) du joint (102) dans le tube correspondant, la saillie intérieure (208) comportant un ou plusieurs chemins de distribution de fluide (403) intégrés dans une paroi latérale de la saillie intérieure (208) qui fournissent un canal depuis un ou plusieurs orifices de distribution de fluide prévus sur le joint (102) jusqu'à un espace entre une surface intérieure du tube correspondant et une surface extérieure de la saillie intérieure (208) ;
le chauffage d'au moins une partie du joint (102) à une température de surface d'au moins environ 50 °C ;
la fixation (1) d'une source d'adhésif à au moins l'un des orifices de distribution de fluide et (2) d'une source de pression négative à au moins l'un des orifices de distribution de fluide ; et
l'injection d'adhésif dans l'espace entre la surface intérieure du tube correspondant et la surface extérieure de la saillie intérieure (208) par (1) la fourniture de l'adhésif depuis la source d'adhésif à travers l'au moins un orifice de distribution de fluide et (2) et le tirage d'adhésif dans l'espace par la source de pression négative sur l'au moins un des orifices de distribution de fluide.

11. Procédé selon la revendication 10, comprenant en outre le retrait des un ou plusieurs orifices de distribution de fluide prévus sur le joint (102) après la pose de l'adhésif.

12. Procédé selon la revendication 10, dans lequel au moins une partie de la surface de la saillie intérieure (208) comprend un ou plusieurs éléments de centrage.

13. Procédé selon la revendication 12, dans lequel les éléments de centrage forcent une distance d'espacement prédéfinie entre la surface de la saillie intérieure (208) et une surface intérieure du tube correspondant.

14. Procédé selon la revendication 12, dans lequel les éléments de centrage fournissent un ou plusieurs canaux pour étaler l'adhésif injecté dans l'espace entre la surface intérieure du tube correspondant et la surface extérieure de la saillie intérieure (208).

15. Procédé selon la revendication 10, dans lequel l'adhésif présente une viscosité d'au moins environ 1 000 cP mesurée à 25 °C.
